# EUROPEAN PATENT APPLICATION

(11) **EP 1 760 524 A1**
(43) Date of publication of application: **07.03.2007**
(21) Application number: 06254471.3
(22) Date of filing: 29.08.2006
(51) Int. Cl.: G03B 21/14, H04N 5/57, H04N 5/58

(54) **Method of controlling projection-type display device and projection-type display device using the same**

(30) Priority: 29.08.2005 KR 20050079562
(71) Applicant: LG Electronics Inc., Yongdungpo-gu Seoul (KR)
(72) Inventor: Choi, Jeoung Su, Gumi-si Gyeongsangbuk-do (KR)
(74) Representative: Bryn-Jacobsen, Caelia

(57) **Abstract**

A method of controlling a projection-type display device (200,500,700) and a projection-type display device (200,500,700) using the same optimizes the contrast ratio of a screen regardless of ambient brightness conditions. A projection-type display device (200,500,700) having an aperture for transmitting light toward a screen includes a sensor (205,705) for detecting ambient brightness with respect to the projection-type display device (200,500,700); a generator (203,503,703) for generating an aperture control signal according to the detected ambient brightness; and a controller (202,502,702) for adjusting an open/close range of the aperture according to the generated aperture control signal.

## Description

The present invention relates to display devices, and more particularly, but not limited to, a method of controlling a projection-type display device and to a projection-type display device using the same.

A projection-type display device realizes a large screen by projecting an image using a system of mirrors and lenses and may be classified according to its picture-displaying system, which includes an optical unit. For example, the optical unit of a projection-type display system may employ a projection CRT, a liquid crystal display, or a digital light processor, each of which may employ a video generator supplying an input to a pulse width modulation (PWM) controller for adjustably controlling the data range of a PWM signal. Alternatively, the projection-type display system may employ a liquid-crystal-on-silicon (LCoS) optical unit, in which case an LCoS driver and LCoS field-programmable gate array may substitute for the video generator and PWM controller, respectively.

An important characteristic of a projection-type display device is its contrast ratio, which greatly affects image quality. The contrast ratio of a screen is the ratio of the respective luminosities of the brightest and darkest colors that the system is capable of producing. Therefore, a high contrast ratio enables the display of clearer and more vivid images on the screen.

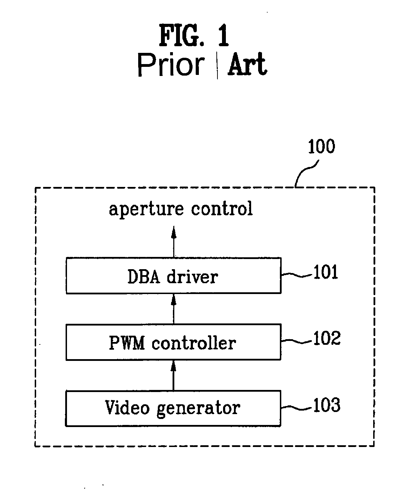

FIG. 1 illustrates a general projection-type display device, which includes a DBA driver 101 for controlling (adjusting) an operational range of a "dynamic black" aperture or DBA, which is a feature of projection video devices and is used to enhance a contrast ratio. The dynamic black aperture is controlled (its degree of opening being set) based on a data range of a PWM signal output from a PWM controller 102 receiving an input signal via a video generator 103, i.e., an input signal source. The PWM controller 102 adjusts the data range of the PWM signal, and the DBA driver 101 adjusts (sets) an open/closed state of an aperture according to the adjusted data range of the PWM signal, i.e., from 0% to 100%, which corresponds to a quantity of light allowed to pass through the aperture. For example, the DBA driver 101 controls the dynamic black aperture to be in a fully open state when the PWM signal data is 100% and controls the dynamic black aperture to be in a fully closed state when the PWM signal data is 0%.

In a projection-type display device as described above, the DBA driver 101 adjusts the aperture, i.e., light quantity, based solely on a detected average luminance of a video signal. Therefore, contrast ratio may be effectively reduced by ambient brightness conditions, thereby degrading image quality since the display of clear, vivid images is difficult with low contrast ratios. For instance, the screen may become darker in a brightly lit room or may become brighter in a darkly lit room, which impedes the operation of a low gray scale and reduces a contrast ratio accordingly. Moreover, in controlling aperture operation as above, there is no provision for auxiliary adjustment methods, such as through a user selection made via an on-screen display (user interface) menu for varying a brightness control value.

The present invention is set out in the independent claims. Some optional features are set out in the claims dependent thereto.

According to one aspect, there is a projection-type display device control method and projection-type display device using the same that substantially obviates one or more problems due to limitations and disadvantages of the prior art.

According to another aspect, there is a method of controlling a projection-type display device and a projection-type display device using the same, which optimizes the contrast ratio of a screen regardless of ambient brightness conditions.

In another aspect, there is a method of controlling a projection-type display device and a projection-type display device using the same, which improves image quality.

In a further aspect, there is a method of controlling a projection-type display device and a projection-type display device using the same, by which a screen can display an image of enhanced quality by compensating a brightness control value and optimizing a contrast ratio.

In yet a further aspect, there is a method of controlling a projection-type display device and a projection-type display device using the same, which enables a user selection of a brightness control value regardless of ambient brightness conditions.

According to one aspect, there is provided a projection-type display device having an aperture for transmitting light toward a screen. The projection-type display device comprises a sensor for detecting ambient brightness with respect to the projection-type display device; a generator for generating an aperture control signal according to the detected ambient brightness; and a controller for adjusting an open/close range of the aperture according to the generated aperture control signal. In an alternative embodiment, the projection-type display device comprises a memory for storing a brightness control value set according to a user selection; a generator for generating an aperture control signal according to the stored brightness control value; and a controller for adjusting an open/close range of the aperture according to the generated aperture control signal. Yet another embodiment combines the concepts of above two embodiments.

The accompanying drawings, which are included to provide a further understanding of the invention and are incorporated in and constitute a part of this application, illustrate embodiment(s) of the invention by way of example only and together with the description serve to explain the principle of the invention. In the drawings:

FIG. 1 is a block diagram of a projection-type display device according to a prior art;

FIG. 2 is a block diagram of a projection-type display device according to a first embodiment of the present invention;

FIG. 3A is a cross-sectional diagram of a DBA driver according to the present invention;

FIG. 3B is a graph of the data range of a PWM signal according to FIG. 3A;

FIG. 4A is another cross-sectional diagram of a DBA driver according to the present invention;

FIG. 4B is a graph of the data range of a PWM signal according to FIG. 4A;

FIG. 5 is a block diagram of a projection-type display device according to a second embodiment of the present invention;

FIG. 6 is a graph of the data range of another PWM signal according to the present invention;

FIG. 7 is a block diagram of a projection-type display device according to a third embodiment of the present invention;

FIG. 8 is a flowchart of a method of controlling a projection-type display device according to the first embodiment of the present invention;

FIG. 9 is a flowchart of a method of controlling a projection-type display device according to the second embodiment of the present invention; and

FIG. 10 is a flowchart of a method of controlling a projection-type display device according to the third embodiment of the present invention.

Wherever possible, like reference designations will be used throughout the drawings to refer to the same or similar parts.

The present invention automatically improves a contrast ratio, which may become degraded due to the proximity of a light source positioned near a projection-type display device or due to brightness variations made via a user interface menu, thereby enabling higher (optimized) contrast ratios so as to promote the display of an optimized screen image. The present invention may be applied to a projection-type display device employing a projection CRT, liquid crystal display, or digital light processor. As in the case of a general projection-type display device, the projection-type display device of a first, second, or third embodiment of the present invention may employ a liquid-crystal-on-silicon (LCoS) optical unit, as in an LCoS projection television, in which case an LCoS driver and LCoS field-programmable gate array may substitute for the video generator and PWM controller, respectively.

### First Embodiment

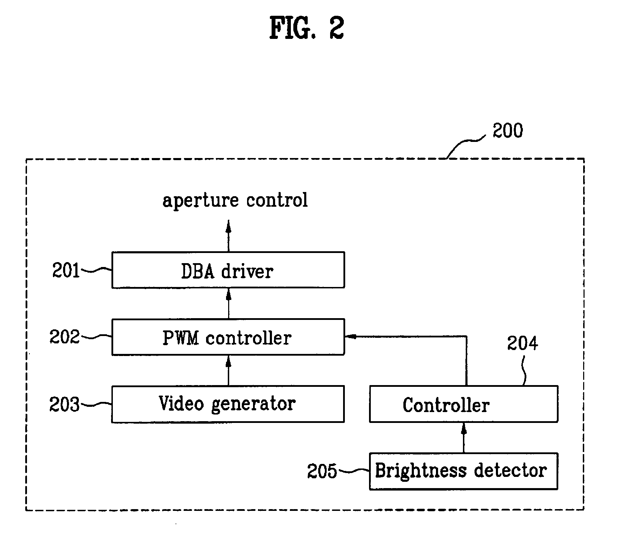

FIG. 2 illustrates a projection-type display device 200 according to a first embodiment of the present invention. Here, a DBA driver 201 controls an operational range of an aperture, which may be a dynamic black aperture (DBA). The aperture is set based on the data range of a PWM signal output from a PWM controller 202 receiving an input signal via a video generator 203, i.e., an input signal source. The PWM controller 202 determines the data range of the PWM signal, and the DBA driver 201 controls the aperture's open/closed state. The PWM controller 202 generates an aperture control signal, e.g., a PWM signal, according to an ambient brightness as detected by a brightness detector 205.

The brightness detector 205 detects a level of light, i.e., brightness, present near a screen of the projection-type display device 200, as an ambient brightness, which is output as a signal (e.g., a voltage value). The ambient brightness value is applied to a controller 204, which determines whether bright or dark ambient conditions are present by comparing the detected ambient brightness value to a specific reference value that may be preset by the brightness detector 205. For example, the room or area in which the projection-type display device 200 is installed may become relatively bright or dark at any time. Ambient brightness conditions could be determined as "dark" if the currently detected brightness were to drop below, say, 50cd/m², and could be determined as "bright" if the currently detected brightness were to exceed, say, 200cd/m², such that a normal ambient brightness value might occur between the above specific reference values.

For a detected ambient brightness determined as above to be "dark," the brightness detector 205 outputs a corresponding signal to the controller 204, which in turn controls (sets) the PWM controller 202 to set the data range of a PWM signal to be wider than the data range according to normal (preset) conditions, which may be set by a manufacturer. Conversely, for a detected ambient brightness determined as above to be "bright," the brightness detector 205 outputs a corresponding signal to the controller 204, which in turn controls the PWM controller 202 to set the data range of a PWM signal to be narrower than the data range according to the preset normal conditions. An upper limit of the PWM data range may be set to be roughly equivalent or comparable to the upper limit of the normal data range.

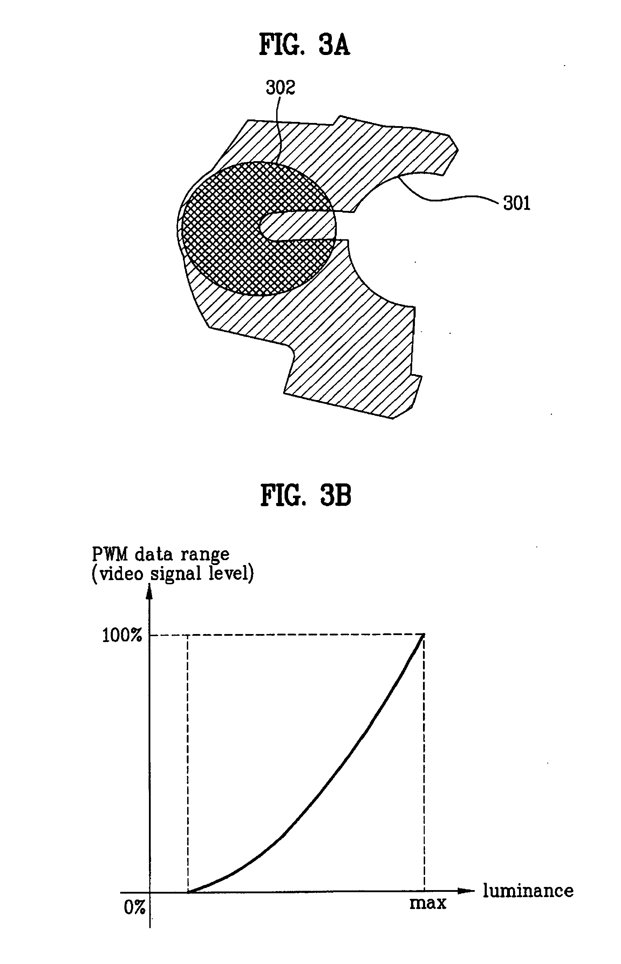

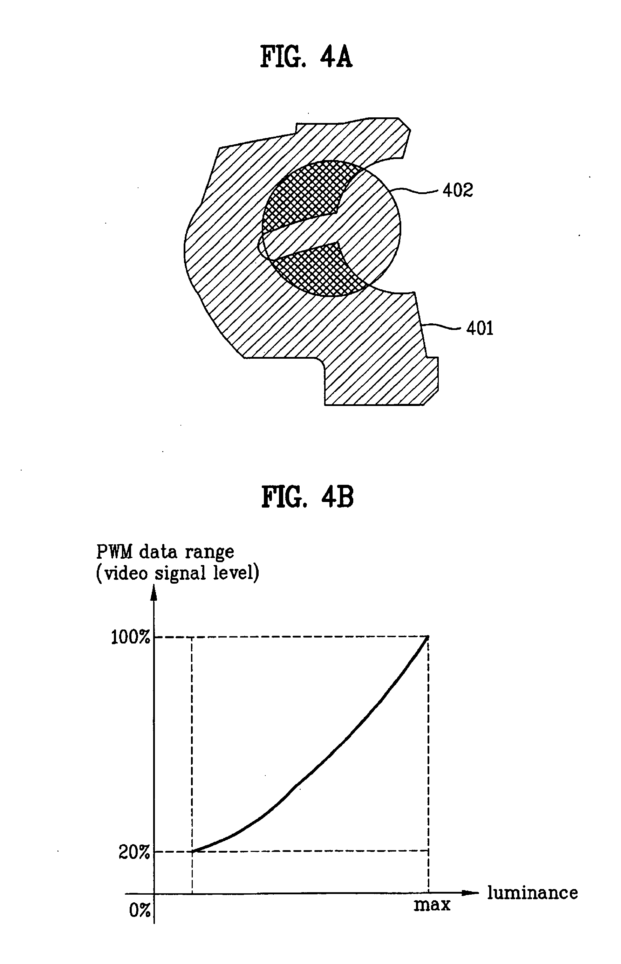

As shown in FIGS. 3A and 4A, the projection-type display device 200 includes a shutter 301 or 401 for opening and closing an aperture 302 or 402 for transmitting light toward a screen. The shutter adjusts a quantity of transmitted light via the aperture. FIGS. 3A and 4A each show fully closed states, while FIGS 3B and 4B show exemplary PWM data ranges corresponding to the shutter/aperture state of FIG. 3A or 4A.

Meanwhile, the PWM data range may correspond to a range of the aperture control signal. That is, the data range of the PWM signal is determined by the controller 204 and PWM controller 202, so that the DBA driver 201 is able to drive the aperture accordingly. For instance, assuming a PWM data range under normal conditions to be 10~100%, a PWM data range in dark ambient conditions may be set to 0~100%, as in FIG. 3B. At the same time, that is, assuming the same PWM data range under normal conditions to be 10~100%, a PWM data range in bright ambient conditions may be set to 20~100%, as in FIG. 4B.

For instance, if under normal conditions a fully closed state corresponds to a 10% aperture opening (90% closed), a fully closed state in dark ambient conditions may correspond to a 0% aperture opening (100% closed), and as shown in FIG. 3A, all but 10% of the area of the aperture 302 is covered by the shutter 301. Here, a 0% aperture opening would denote a complete covering of the entire area of the aperture 302. At the same time, again assuming that under normal conditions a fully closed state corresponds to a 10% aperture opening, a fully closed state in bright ambient conditions may correspond to a 20% aperture opening, as shown in FIG. 4A.

Accordingly, for a determination of dark ambient conditions, the DBA driver 201 controls a fully closed state of a DBA operation to be more closed than in preset normal conditions, as in FIG. 3A, so that normal display characteristics of a video signal can be maintained in dark ambient conditions. Conversely, for a determination of bright ambient conditions, the DBA driver 201 controls a fully closed state of a DBA operation to be less closed than in preset normal conditions, as in FIG. 4A, so that normal display characteristics of a video signal can likewise be maintained in bright ambient conditions.

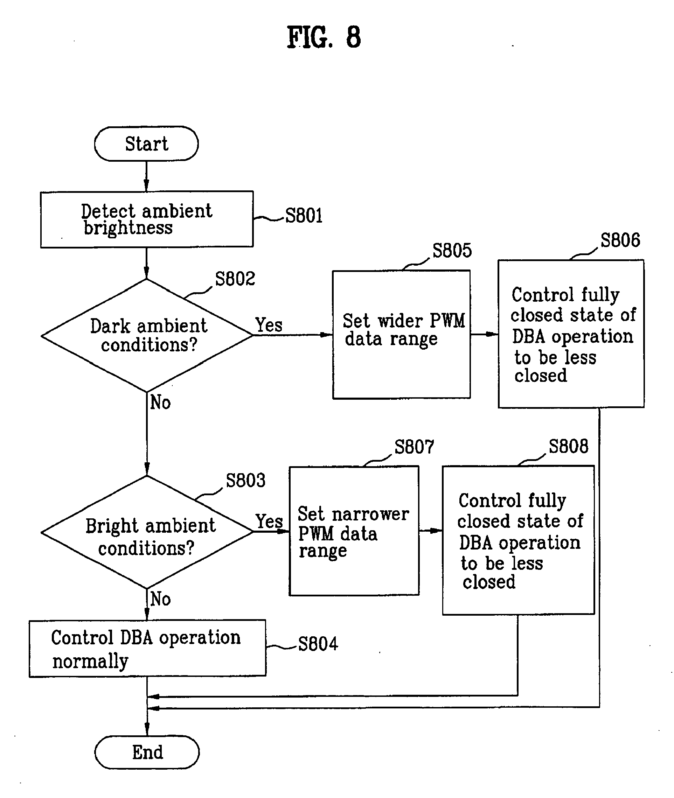

A method of controlling a projection-type display device according to the first embodiment of the present invention is shown in FIG. 8. Here, the projection-type display device 200 is provided with means for detecting ambient brightness, for example, a sensor positioned with respect to an area forward of the screen or in the immediate proximity of the projection-type display device, so as to sense (detect) a current brightness with respect to the screen.

Referring to FIG. 8, ambient brightness is detected, that is, light levels proximate to the projection-type display device are sensed by the brightness detector 205 (S801). Based on the detection, it is determined whether ambient conditions are consistent with a brightly lit room or a darkly lit room (S802, S803). If it is determined that the room is neither unusually dark or bright, DBA operation is controlled normally, that is, in accordance with preset conditions that may be determined by a manufacturer (S804). On the other hand, for dark ambient conditions, the data range of a PWM signal is set to be wider than the PWM data range of the preset normal conditions (S805), and DBA operation is controlled accordingly. Namely, the fully closed state of a DBA operation is controlled so as to be "more closed" than in the case of a fully closed state of the preset normal conditions (S806). In other words, DBA operation is controlled such that the degree of aperture closing, when fully closed, is more than it would be under normal conditions.

Meanwhile, for bright ambient conditions, a converse DBA operation is performed. Here, the data range of a PWM signal is set to be narrower than the PWM data range of the preset normal conditions (S807), and DBA operation is controlled accordingly. Namely, the fully closed state of a DBA operation is controlled so as to be "less closed" than in the case of a fully closed state of the preset normal conditions (S808). In other words, DBA operation is controlled such that the degree of aperture closing, when fully closed, is less than it would be under normal conditions.

### Second Embodiment

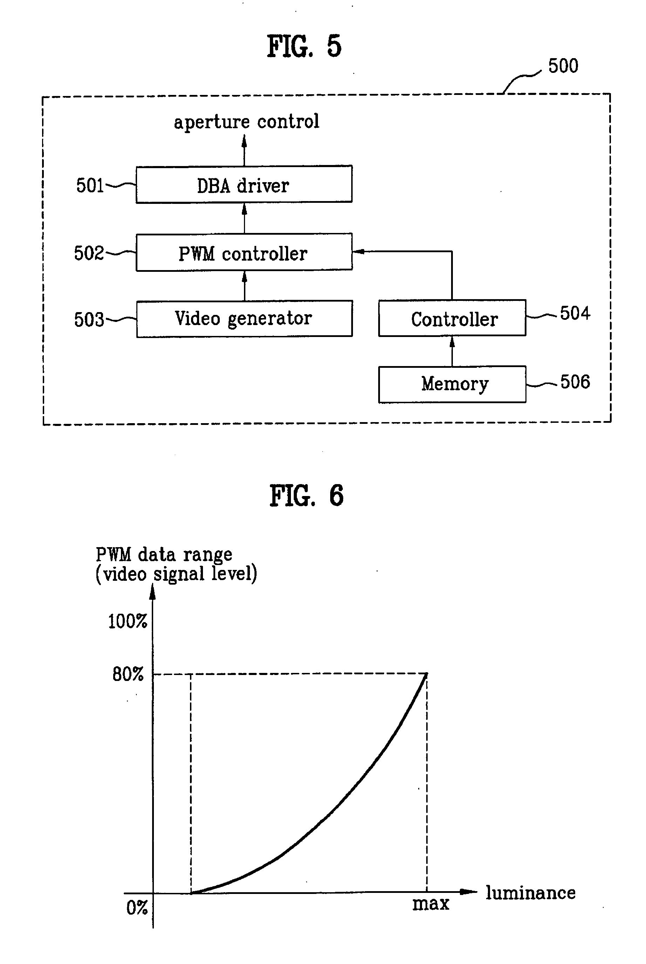

FIG. 5 illustrates a projection-type display device 500 according to a second embodiment of the present invention. Here, a DBA driver 501 controls an operational range of an aperture, e.g., a dynamic black aperture. The aperture is set based on the data range of a PWM signal output from a PWM controller 502 receiving an input signal via a video generator 503, i.e., an input signal source. The PWM controller 502 determines the data range of the PWM signal, and the DBA driver 501 controls the aperture's open/closed state. The PWM controller 502 generates an aperture control signal, e.g., a PWM signal, according to a brightness control value stored in a memory 506. The brightness value may be adjusted and set (stored) through manipulation of a user interface menu, using a user input unit (not shown) of the projection-type display device 500.

Once set, the brightness control value is stored in the memory 506, which may include any device capable of storing a range of brightness control values, and the stored value is supplied to a controller 504, which controls (sets) the data range of a PWM signal accordingly. For example, if the stored value is less than or equal to (i.e., not greater than) a preset reference value, the controller 504 sets the data range of a PWM signal to be narrower than the data range for preset normal conditions and controls the PWM controller 502 such that the fully open state of a DBA operation is less open than in the preset normal conditions. The preset reference value may be set to about 50%, considering an adjustable range of the brightness control value of 0~100%. A range corresponding to an image being more darkly displayed than under a normal condition may be set less than or equal to the reference value.

If a normal-condition PWM data range is 0~100%, in case of the PWM data range adjusted narrower than the data range of the normal state, a lower limit is set equal to or similar to that of the normal state. An upper limit can be set to 80% of the normal conditions, as shown in FIG. 6, since a darker display of a readily visible image is possible with lower brightness levels when there is a significant reduction in a numerical value of the upper limit. Here, the data range of the PWM signal is determined by the controller 504 and PWM controller 502, so that the DBA driver 501 is able to drive the aperture accordingly.

For a stored brightness control value of less than the reference value, the DBA driver 501 is able to control a fully open state of a DBA operation to be less open than in a normal condition, so that normal display characteristics of a video signal can be maintained in dark ambient conditions. For a stored brightness control value greater than the preset reference value, on the other hand, the DBA driver 501 controls the aperture normally, since an image is being more brightly displayed when a brightness control value exceeds a reference value. Hence, it is unnecessary to manipulate the aperture separately.

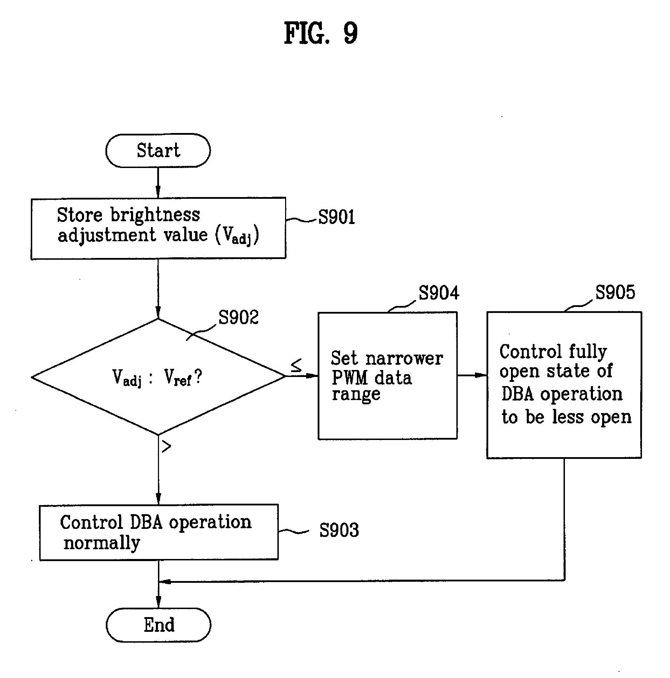

A method of controlling a projection-type display device according to the second embodiment of the present invention is shown in FIG. 9. Here, the projection-type display device 500 is provided with means for setting a brightness value through, for example, manipulation of a user interface menu.

Referring to FIG. 9, a brightness adjustment value (V_{adj}) set as above is stored in the memory 506 (S901). The stored brightness adjustment value is then compared to a brightness reference value (V_{ref}), which may be determined by a manufacturer and pre-stored in memory (S902). If the stored value is greater than the reference value, DBA operation is controlled normally, that is, in accordance with preset conditions that may be determined by the manufacturer (S903). On the other hand, if the stored value is less than or equal to (i.e., not greater than) the reference value, the data range of a PWM signal is set to be narrower than the PWM data range of the preset normal conditions (S904), and DBA operation is controlled accordingly. Namely, the fully open state of a DBA operation is controlled so as to be "less open" than in the case of a fully open state of the preset normal conditions (S905). In other words, DBA operation is controlled such that the degree of aperture opening, when fully open, is less than it would be under normal conditions.

### Third Embodiment

A configuration of the present invention according to the third embodiment generally combines configurations of the first and second embodiments. Accordingly, some overlapping explanation will be omitted in the following description.

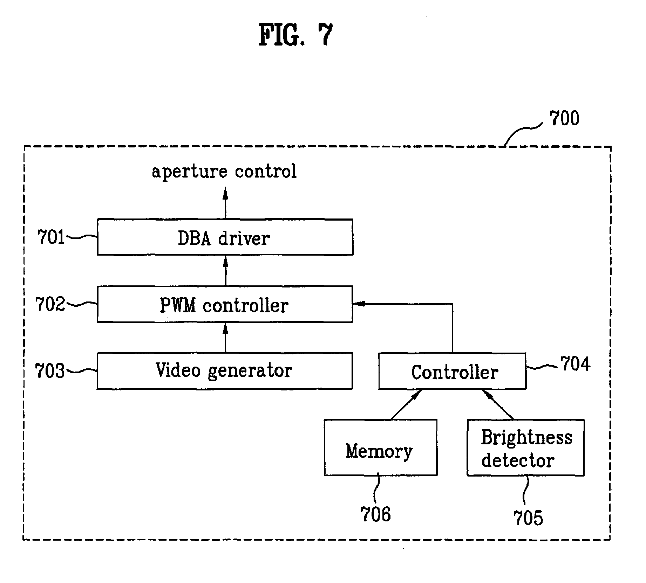

FIG. 7 illustrates a projection-type display device 700 according to a third embodiment of the present invention. Here, a DBA driver 701 controls an operational range of an aperture, e.g., a dynamic black aperture. The aperture is set based on a data range of a PWM signal output from a PWM controller 702 receiving an input signal via a video generator 703, i.e., an input signal source. The PWM controller 702 determines the data range of the PWM signal, and the DBA driver 501 controls the aperture's open/closed state.

A brightness detector 705 detects ambient brightness with respect to the projection-type display device 700. A memory 706 stores a brightness control value set via a user input unit (not shown) of the projection-type display device 700. The controller 704 adjusts, by controlling the PWM controller 702, the data range of a PWM signal according to the detected ambient brightness and the stored brightness control value. A DBA driver 701 is able to differently operate an extent of a fully closed state or a fully open state of the aperture according to the PWM signal data range adjusted under control of the controller 704. If the currently detected ambient brightness is lower than a preset "dark condition" brightness, the DBA driver 701 controls a fully closed state of a DBA operation to be more closed than that of a preset normal condition, so that normal display characteristics of a video signal can be maintained in dark ambient conditions. On the other hand, if the currently detected ambient brightness is higher than a preset "bright condition" brightness, the DBA driver 701 controls a fully closed state of a DBA operation to be less closed than that of a preset normal condition, so that normal display characteristics of a video signal can likewise be maintained in bright ambient conditions.

Meanwhile, if the controller 704 determines that the brightness control value stored in the memory 706 is less than or equal to a reference value, the controller 704 outputs to the DBA driver 701 a corresponding control signal for controlling a fully open state of the DBA operation to be less open than in preset normal conditions. Hence, normal display characteristics of a video signal can be maintained in dark ambient conditions.

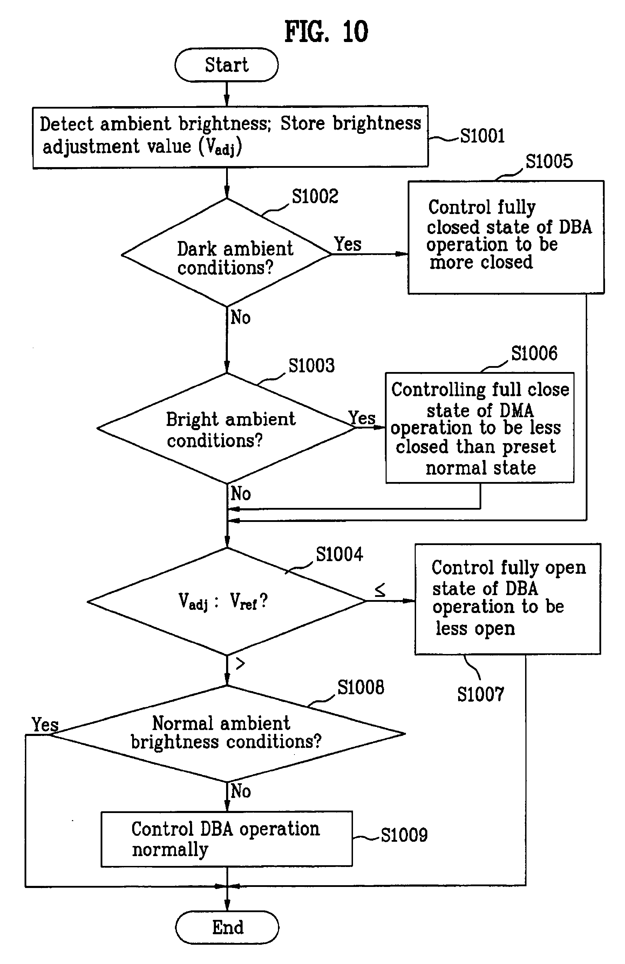

A method of controlling a projection-type display device according to the third embodiment of the present invention is shown in FIG. 10. Here, the projection-type display device 700 is provided with both means for setting a brightness value as in the first embodiment and means for detecting ambient brightness as in the second embodiment.

Referring to FIG. 10, ambient brightness is detected by the brightness detector 705, and a brightness adjustment value is stored in the memory 706 (S1001). Based on the detection, it is determined whether ambient conditions are consistent with a brightly lit room or a darkly lit room (S1002, S1003), and if it is determined that the room is neither unusually dark or bright, the stored value is compared to a reference value (S1004). Accordingly, DBA operation is controlled such that, relative to preset normal conditions, the fully closed state is more closed in dark ambient conditions and is less closed in bright ambient conditions (S1005, S1006). Meanwhile, for intermediate levels of ambient brightness, and when the stored value is not greater than the reference value, DBA operation is controlled such that the fully open state is less open than preset normal conditions (S1007); otherwise, namely, if the stored value is greater than the reference value, it is determined again whether the ambient brightness conditions are relatively normal, for example, falling in an intermediate range of brightness levels (S1008). Accordingly, if it is determined that the room is neither unusually dark or bright and that the stored value is greater than the reference value, DBA operation is controlled normally, that is, in accordance with preset conditions that may be determined by a manufacturer (S1009).

By adopting the present invention, reduction of a contrast ratio of the screen of a projection-type display device, which may occur due to the proximity of a light source or to brightness variations made via a user interface menu, is prevented. Thus, the higher contrast ratio of a projection-type display device according to the present invention promotes the display of clear, vivid images on the screen and enables an optimized contrast ratio in projection-type display devices.

It will be apparent to those skilled in the art that various modifications can be made in the present invention without departing from the scope of the invention. Thus, it is intended that the present invention covers such modifications provided they come within the scope of the appended claims and their equivalents.

## Claims

1. A projection-type display device having an aperture for transmitting light toward a screen, the projection-type display device comprising:
a sensor for detecting ambient brightness with respect to the projection-type display device;
a generator for generating an aperture control signal according to the detected ambient brightness; and
a controller for adjusting an open/close range of the aperture according to the generated aperture control signal.

2. The projection-type display device of claim 1, wherein, if the detected ambient brightness is lower than a preset brightness corresponding to a dark ambient condition, said controller controls a fully closed state of the aperture to be more closed than a fully closed state of a preset normal condition; and/or wherein, if the detected ambient brightness is higher than a preset brightness corresponding to a bright ambient condition, said controller controls a fully closed state of the aperture to be less closed than a fully closed state of a preset normal condition.

3. The projection-type display device of claim 1, wherein the projection-type display device includes a projection television; and/or wherein the aperture control signal pulse-width-modulation signal; and/or wherein the aperture is a dynamic black aperture.

4. A projection-type display device having an aperture for transmitting light toward a screen, the projection-type display device comprising:
a memory for storing a brightness control value set according to a user selection;
a generator for generating an aperture control signal according to the stored brightness control value; and
a controller for adjusting an open/close range of the aperture according to the generated aperture control signal.

5. The projection-type display device of claim 4, wherein, if the stored brightness control value is not greater than a preset reference value, said controller controls a fully open state of the aperture to be less open than a fully open state of a preset normal condition.

6. A projection-type display device having an aperture for transmitting light toward a screen, the projection-type display device comprising:
a sensor for detecting an ambient brightness with respect to the projection-type display device;
a memory for storing a brightness control value set according to a user selection;
a generator for generating an aperture control signal according to the detected ambient brightness and the stored brightness control value; and
a controller for adjusting an open/close range of the aperture according to the generated aperture control signal.

7. The projection-type display device of claim 6, wherein, if the detected ambient brightness is lower than a preset brightness corresponding to a dark ambient condition, said controller controls a fully closed state of the aperture to be more closed than a fully closed state of a preset normal condition; and/or wherein, if the detected ambient brightness is higher than a preset brightness corresponding to a bright ambient condition, said controller controls a fully closed state of the aperture to be less closed than a fully closed state of a preset normal condition; and/or wherein, if the stored brightness control value is not greater than a preset reference value, said controller controls a fully open state of the aperture to be less open than a fully open state of a preset normal condition.

8. A method of controlling a projection-type display device having an aperture for transmitting light toward to a screen, the method comprising:
detecting an ambient brightness with respect to the projection-type display device;
generating an aperture control signal according to the detected ambient brightness; and
adjusting an open/close range of the aperture according to the generated aperture control signal.

9. The method of claim 8, wherein, if the detected ambient brightness is lower than a preset brightness corresponding to a dark ambient condition, a fully closed state of the aperture is controlled by said adjusting to be more closed than a fully closed state of a preset normal condition; and/or wherein, if the detected ambient brightness is higher than a preset brightness corresponding to a bright ambient condition, a fully closed state of the aperture is controlled by said adjusting to be less closed than a fully closed state of a preset normal condition.

10. A method of controlling a projection-type display device having an aperture for transmitting light toward a screen, the method comprising:
setting a brightness control value according to a user selection;
generating an aperture control signal according to the set brightness control value; and
adjusting an open/close range of the aperture according to the generated aperture control signal.

11. The method of claim 10, wherein, if the stored brightness control value is not greater than a preset reference value, a fully open state of the aperture is controlled by said adjusting to be less open than a fully open state of a preset normal condition.

12. A method of controlling a projection-type display device having an aperture for transmitting light toward a screen, the method comprising:
detecting an ambient brightness with respect to the projection-type display device;
setting a brightness control value according to a user selection;
generating an aperture control signal according to the detected ambient brightness and the set brightness control value; and
adjusting an open/close range of the aperture according to the generated aperture control signal.

13. The method of claim 12, wherein, if the detected ambient brightness is lower than a preset brightness corresponding to a dark ambient condition, said controller controls a fully closed state of the aperture is controlled by said adjusting to be more closed than a fully closed state of a preset normal condition; and/or wherein, if the detected ambient brightness is higher than a preset brightness corresponding to a bright ambient condition, a fully closed state of the aperture is controlled by said adjusting to be less closed than a fully closed state of a preset normal condition; and/or wherein, if the stored brightness control value is not greater than a preset reference value, a fully open state of the aperture is controlled by said adjusting to be less open than a fully open state of a preset normal condition.
